# EUROPÄISCHE PATENTANMELDUNG

(11) **EP 2 072 382 A1**
(43) Veröffentlichungstag der Anmeldung: **24.06.2009**
(21) Anmeldenummer: 07123768.9
(22) Anmeldetag: 20.12.2007
(51) Int. Cl.: B62D 53/12, B60D 1/64

(54) **Steckverbindungsanordnung für Sattelkupplungen**

(71) Anmelder: Georg Fischer Verkehrstechnik GmbH, 78224 Singen (DE)
(72) Erfinder: Hurst, Frank, 77704 Oberkirch (DE); Riesterer, Michael, 78247 Hilzingen (DE)
(74) Vertreter: Bauer, Clemens

(57) **Zusammenfassung**

Es wird eine Steckverbindungsanordnung (11) für Sattelkupplungen (1) vorgeschlagen umfassend ein Steckverbinderoberteil (9), das im Königszapfen (5) eines Sattelaufliegers angeordnet ist und ein Steckverbinderunterteil (7), das in der Sattelkupplungsplatte (2) eines Zugfahrzeuges angeordnet ist, wobei das Steckverbinderoberteil (9) und das Steckverbinderunterteil (7) jeweils zu einander steckverbindbare elektrische und pneumatische oder hydraulische Leitungen aufweist, wobei die Leitungen als ringförmig angeordnete Steckerbuchsen und/oder Kupplungen ausgebildet sind, und wobei die Steckverbindungsanordnung (11) über eine separate Lageranordnung (12) drehbar angeordnet ist.

## Beschreibung

Die Erfindung bezieht sich auf eine Steckverbindungsanordnung für Sattelkupplungen umfassend ein Steckverbinderoberteil, das im Königszapfen eines Sattelaufliegers angeordnet ist und ein Steckverbinderunterteil, das in der Sattelkupplungsplatte eines Zugfahrzeuges angeordnet ist, wobei das Steckverbinderoberteil und das Steckverbinderunterteil jeweils zu einander steckverbindbare elektrische und pneumatische oder hydraulische Leitungen aufweist.

Bei grösseren Kraftfahrzeugen wird der Sattelauflieger mit dem Zugfahrzeug mittels einer Sattelkupplung gekuppelt. Die Sattelkupplung umfasst im Wesentlichen eine Sattelkupplungsplatte mit einer Schliessvorrichtung am Zugfahrzeug und einen so genannten Königszapfen am Sattelauflieger. Ausser dieser mechanischen Verbindung müssen weitere, wie z.B. elektrische, hydraulische und pneumatische Verbindungen zwischen dem Zugfahrzeug und dem Anhänger hergestellt werden. Üblicherweise werden, wegen der Beweglichkeit des Sattelzuges, diese Verbindungen über flexible Leitungen einzeln zusammengesteckt. Das ist für den Fahrer beim Kuppeln und Entkuppeln des Sattelzuges aufwändig und zeitraubend.

Aus der EP 1240067 B1 ist eine gattungsgemässe Sattelkupplung mit einer Verbindungsanordnung zur Verbindung von elektrischen und pneumatischen Leitungen bekannt. Der Königszapfen am Sattelauflieger ist mit einer axialen Bohrung ausgebildet, in die, von der Achse des Königszapfens aus gesehen, eine elektrische Verbindungsanordnung für Gleichspannung und konzentrisch dazu eine Verbindungsanordnung für elektronische Datenübermittlung vorgesehen ist. Radial weiter aussen liegend ist in einem Ringzylinderraum die Kupplung der Druckluftleitungen vorgesehen. Am Zugfahrzeug ist in einem Bereich, der beim Kupplungsvorgang unterhalb des Zapfens liegt, ein Versorgungsteil mit komplementären Verbindungsanordnungen ausgebildet. Diese Anordnung ist bei den Betriebsbedingungen, die in der Sattelkupplung herrschen, äusserst empfindlich für Beschädigungen und Verschmutzungen, die zu Fehlfunktionen führen. Bei den grösseren und schwereren Sattelzügen ist der Ringzylinderraum für die benötigte Druckluft nicht mehr ausreichend. Vor allem die Bremsanlagen der modernen Sattelauflieger benötigen eine grosse Luftdurchflussmenge bei kurzen Ansprechzeiten des Druckluftbremssystems.

Ausgehend von diesem Stand der Technik ist es Aufgabe der Erfindung, eine Steckverbindungsanordnung für Sattelkupplungen anzugeben, die auch bei Sattelauflieger mit grösseren Bremsanlagen universell einsetzbar ist und bei einer möglichst langen Lebensdauer eine möglichst sichere Kontaktierung gewährleistet.

Diese Aufgabe wird gelöst durch eine Steckverbindungsanordnung für Sattelkupplungen umfassend ein Steckverbinderoberteil, das im Königszapfen eines Sattelaufliegers angeordnet ist und ein Steckverbinderunterteil, das in der Sattelkupplungsplatte eines Zugfahrzeuges angeordnet ist, wobei das Steckverbinderoberteil und das Steckverbinderunterteil jeweils zu einander steckverbindbare elektrische und pneumatische oder hydraulische Leitungen aufweist, wobei die Leitungen als ringförmig angeordnete Steckerbuchsen und/oder Kupplungen ausgebildet sind, und wobei die Steckverbindungsanordnung über eine separate Lageranordnung drehbar angeordnet ist.

Bevorzugte Weiterbildungen der Erfindung ergeben sich aus den abhängigen Ansprüchen.

Es ist von Vorteil, dass in der Steckverbindungsanordnung die Relativbewegung zwischen den zu verbindenden Steckerteilen möglichst weitgehend verhindert wird. Dies wird dadurch erreicht, dass die Lageranordnung im Königszapfen angeordnet ist. Dies wird auch dadurch erreicht, dass die Lageranordnung zwischen dem Steckverbinderoberteil und dem Königszapfen angeordnet ist. Dies wird auch dadurch erreicht, dass die Lageranordnung im Steckverbinderoberteil angeordnet ist.

Ebenso können Relativbewegungen zwischen den zu verbindenden Steckerteilen verhindert werden, wenn die Lageranordnung an der Sattelkupplungsplatte, zwischen der Sattelkupplungsplatte und dem Steckverbinderunterteil, oder im Steckverbinderunterteil angeordnet ist.

Ausführungsbeispiele der Erfindung werden anhand der Figuren beschrieben. Es zeigen:
Figur 1 einen Schnitt durch eine Sattelkupplung mit einer erfindungsgemässen Steckverbindungsanordnung,
Figur 2 einen Schnitt durch die Steckverbindungsanordnung von Figur 1,
Figur 3 einen Schnitt durch eine weitere Sattelkupplung mit einer erfindungsgemässen Steckverbindungsanordnung und
Figur 4 einen Schnitt durch eine weitere Sattelkupplung mit einer erfindungsgemässen Steckverbindungsanordnung.

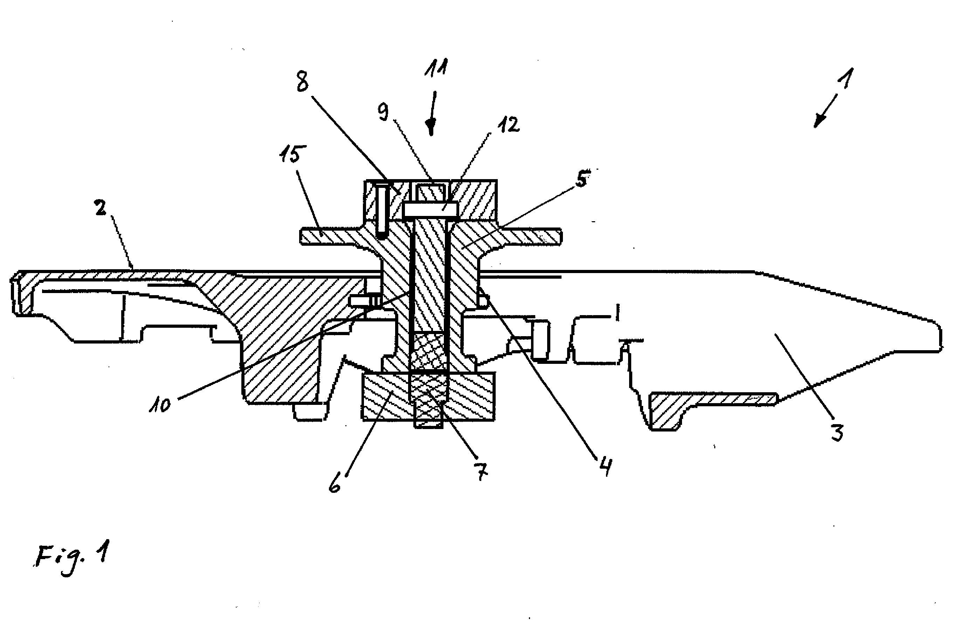

In Figur 1 ist schematisch eine Sattelkupplung 1 geschnitten dargestellt. Die Sattelkupplung 1 umfasst zumindest eine Kupplungsplatte 2 mit einem Einfahrbereich 3 und eine Öffnung 4, in die ein so genannter Königszapfen 5 eingekoppelt wird. Die Sattelkupplungsplatte 2 ist mit der Zugmaschine und der Königszapfen 5 ist an einem ringförmigen Randbereich 15 mit dem Sattelauflieger verbunden angeordnet. Unterhalb der Sattelkupplungsplatte 2 ist schematisch ein unteres Steckverbindergehäuse 6 mit darin einem Steckverbinderunterteil 7 dargestellt. Das Steckverbindergehäuse 6 kann zur Ausführung des Steckvorgangs beweglich, schwimmend gelagert oder fest verbunden mit der Sattelkupplungsplatte 2 angeordnet sein. Oben auf dem Königszapfen 5 ist ein weiteres oberes Steckverbindergehäuse 8 mit darin einem Steckverbinderoberteil 9 dargestellt.

Das Steckverbinderoberteil 9 ist in einer zentralen Bohrung 10 im Königszapfen 5 angeordnet. Mit der zentralen Bohrung 10 wird eine kompakte und gesicherte Ausbildung der Steckverbindungsanordnung 11, die im Wesentlichen aus dem Oberteil 9 und dem Unterteil 7 aufgebaut ist, erreicht. In den Steckverbindergehäusen 6,8 werden elektrische und pneumatische oder hydraulische Leitungen an dem Steckverbinderoberteil 9 zugeführt und von dem Steckverbinderunterteil 7 weggeführt.

Im unteren Bereich des Königszapfens 5 ist angedeutet, wie das Oberteil 9 mit dem Unterteil 7 zusammengesteckt ist. Die elektrische Steckverbindung wird mittels ringförmiger oder koaxialer Steckverbinder hergestellt. Die zu einander passenden Kontaktteile sind dabei auf Kreisringen angeordnet, deren Radien sehr nahe zusammen liegen, so dass eine Kontaktierung durch Reibung und/oder durch Federvorspannung der Kontaktzungen erfolgt. Die Kupplung der pneumatischen oder hydraulischen Leitungen wird ebenso über axial steckbare Rohrkupplungen hergestellt.

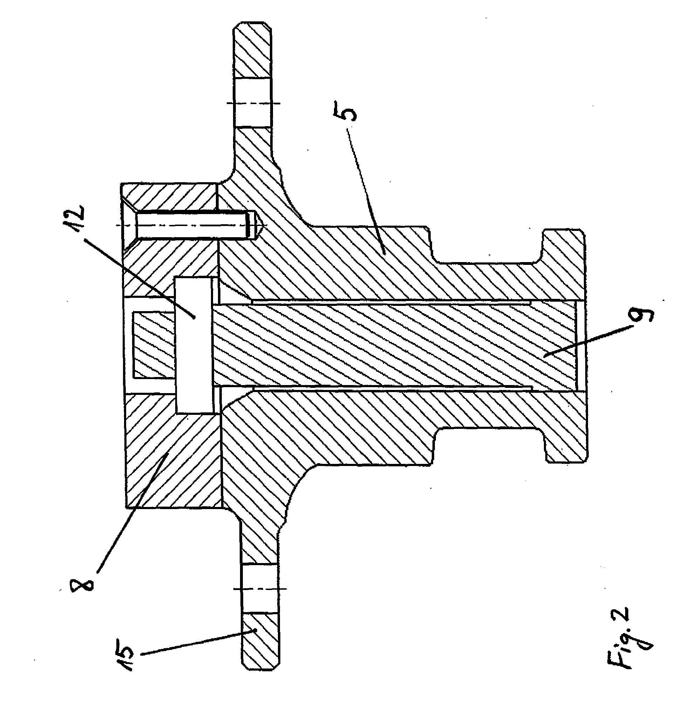

In Figur 2 sind das Steckverbindungsoberteil 9 und das obere Steckverbindergehäuse 8 von Figur 1 in dem Königszapfen 5 vergrössert dargestellt. Im oberen Steckverbindergehäuse 8 ist schematisch eine Lageranordnung 12 für das Steckverbinderoberteil 9 dargestellt. Die Lageranordnung 12 ist derart ausgebildet, dass die einmal gekoppelte Steckverbindungsanordnung 11 relativ zur Sattelkupplung 1 frei bewegen kann, jedoch eine Relativbewegung des Steckverbinderoberteils 9 zum Steckverbinderunterteil 7 verhindert. Die Lageranordnung 12 kann als eine schwimmende Lagerung ausgebildet sein, die freie Bewegungen in allen Richtungen zulässt.

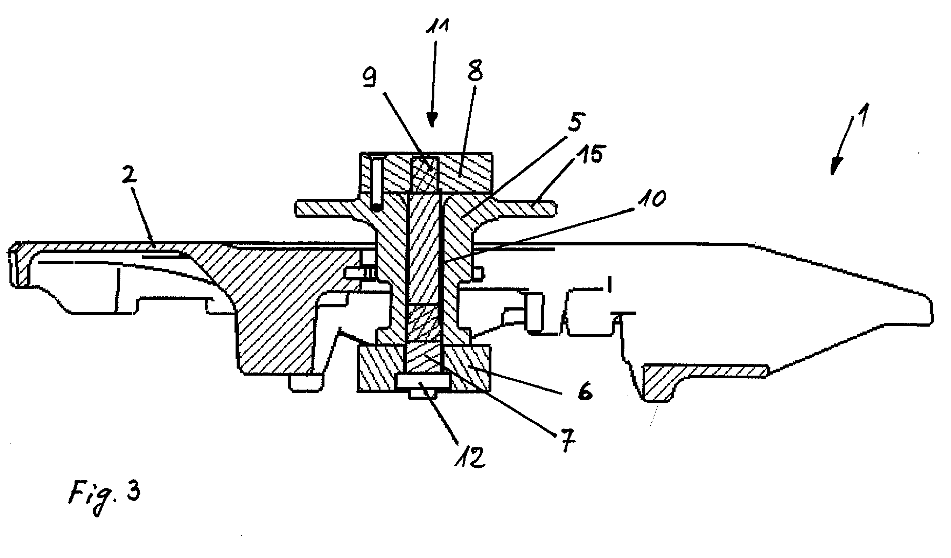

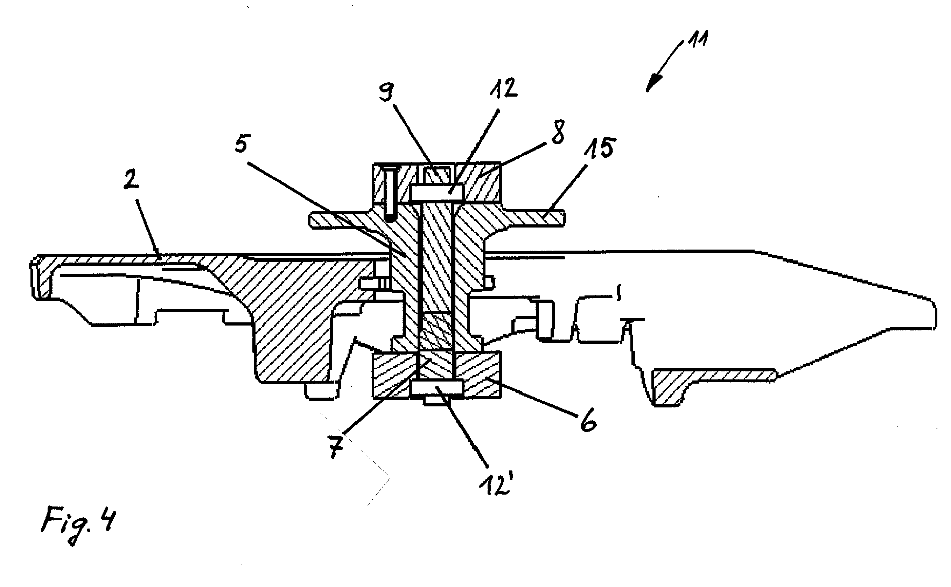

In den Figuren 3 und 4 sind zwei weitere Ausführungsbeispiele der Steckverbindungsanordnung dargestellt. In Figur 3 ist die Lageranordnung 12 im unteren Steckverbindergehäuse 6 angeordnet. Hierbei ist das untere Steckverbindergehäuse 6 fest verbunden mit der Sattelkupplungsplatte 2 angeordnet.

In Figur 4 sind zwei Lageranordnungen 12, 12' dargestellt. Eine obere Lageranordnung 12 im oberen Steckverbindergehäuse 8 sowie eine untere Lageranordnung 12' im unteren Steckverbindergehäuse 6.

Die Lageranordnung 12,12' kann auch in einem Bereich näher zum Königszapfen 5 oder in der Bohrung innerhalb des Königszapfens 5 angeordnet werden. Hiermit wird in den Steckverbindergehäusen 6,8 Platz frei für die Verbindung mit den anzuschliessenden elektrischen und pneumatischen oder hydraulischen Leitungen.

Mit der hier vorgeschlagenen Steckverbindungsanordnung 11 werden dank der separat beweglichen Lageranordnung 12 Relativbewegungen zwischen den verbundenen Steckerteilen 7,9 im einmal gesteckten Zustand weitgehend verhindert. Der Verschleiss als Folge der Reibung zwischen den Kontaktteilen wird auf das Minimum beim eigentlichen Einsteckvorgang beschränkt. Die Lebensdauer der Steckverbindungsanordnung 11 wird erheblich verlängert. Die Dichtflächen in den Steckerteilen 7,9 der Druckluftleitungen werden geschont. Die Übertragungssicherheit in den Daten- und Medienleitungen wird verbessert. Unterbrüche in der Datenübertragung können weitgehend ausgeschlossen werden.

## Patentansprüche

1. Steckverbindungsanordnung (11) für Sattelkupplungen (1) umfassend ein Steckverbinderoberteil (9), das im Königszapfen (5) eines Sattelaufliegers angeordnet ist und ein Steckverbinderunterteil (7), das in der Sattelkupplungsplatte (2) eines Zugfahrzeuges angeordnet ist, wobei das Steckverbinderoberteil (9) und das Steckverbinderunterteil (7) jeweils zu einander steckverbindbare elektrische und pneumatische oder hydraulische Leitungen aufweist, wobei die Leitungen als ringförmig angeordnete Steckerbuchsen und/oder Kupplungen ausgebildet sind, **dadurch gekennzeichnet, dass** die Steckverbindungsanordnung (11) über eine separate Lageranordnung (12) drehbar angeordnet ist.

2. Steckverbindungsanordnung (11) nach dem Anspruch 1, **dadurch gekennzeichnet, dass** die Lageranordnung (12) im Königszapfen (5) angeordnet ist.

3. Steckverbindungsanordnung (11) nach mindestens einem der Ansprüche 1 bis 2, **dadurch gekennzeichnet, dass** die Lageranordnung (12) in einem oberen Steckverbindergehäuse (8) angeordnet ist.

4. Steckverbindungsanordnung (11) nach mindestens einem der Ansprüche 1 bis 3, **dadurch gekennzeichnet, dass** die Lageranordnung (12) zwischen dem Steckverbinderoberteil (9) und dem oberen Steckverbindergehäuse (8) angeordnet ist.

5. Steckverbindungsanordnung (11) nach mindestens einem der Ansprüche 1 bis 4, **dadurch gekennzeichnet, dass** die Lageranordnung (12) an die Sattelkupplungsplatte (2) angeordnet ist.

6. Steckverbindungsanordnung (11) nach mindestens einem der Ansprüche 1 bis 5, **dadurch gekennzeichnet, dass** die Lageranordnung (12) in einem unteren Steckverbindergehäuse (6) angeordnet ist.

7. Steckverbindungsanordnung (11) nach mindestens einem der Ansprüche 1 bis 6, **dadurch gekennzeichnet, dass** die Lageranordnung (12) zwischen dem unteren Steckverbindergehäuse (6) und dem Steckverbinderunterteil (7) angeordnet ist.

8. Steckverbindungsanordnung (11) nach mindestens einem der Ansprüche 1 bis 7, **dadurch gekennzeichnet, dass** im oberen Steckverbindergehäuse (8) und im unteren Steckverbindergehäuse (6) jeweils eine Lageranordnung (12,12') vorgesehen ist.
